Europäisches Patentamt

European Patent Office

Office européen des brevets

(11) Veröffentlichungsnummer: **0 358 982**

**A2**

# EUROPÄISCHE PATENTANMELDUNG

(21) Anmeldenummer: 89115399.1

(22) Anmeldetag: 21.08.89

(51) Int. Cl.⁵ **G01N 21/88 , G01B 11/30**

(30) Priorität: 15.09.88 DE 3831401

(43) Veröffentlichungstag der Anmeldung:
**21.03.90 Patentblatt 90/12**

(84) Benannte Vertragsstaaten:
**AT BE CH DE ES FR GB GR IT LI LU NL SE**

(71) Anmelder: **KOLB GMBH & CO**
**Rathenaustrasse 23**
**D-5600 Wuppertal 2(DE)**

(72) Erfinder: **Karafa, Nandor**
**Am Deckershäuschen 74**
**D-5600 Wuppertal 1(DE)**
Erfinder: **Liebers, Lutz**
**c/o Firma Optec Gmbh Kruppstrasse 82**
**D-4300 Essen(DE)**

(74) Vertreter: **Grau, Ulf**
**c/o ALFRED TEVES GMBH Guerickestrasse 7**
**D-6000 Frankfurt (M) 90(DE)**

(54) Verfahren und Vorrichtung zur automatisierten berührungsfreien Oberflächenkontrolle von zylindrischen Teilen.

(57) Um eine automatisierte berührungsfreie Oberflächenkontrolle von zylindrischen Teilen durchführen zu können, werden ein Verfahren sowie eine Vorrichtung zu dessen Durchführung vorgeschlagen. Die zu prüfenden Teile werden in eine Drehbewegung um ihre Symmetrieachse versetzt und mit weitgehend parallelem Licht bestrahlt, dessen durch die Oberfläche der Teile reflektierter diffus gestreuter Anteil optoelektronisch ausgewertet wird.

EP 0 358 982 A2

## Verfahren und Vorrichtung zur automatisierten berührungsfreien Oberflächenkontrolle von zylindrischen Teilen

Die Erfindung betrifft ein Verfahren zur automatisierten berührungsfreien Oberflächenkontrolle von zylindrischen Teilen sowie eine Vorrichtung zu dessen Durchführung.

Um den heute in der Industriewelt an sämtliche zu verbauenden Teile gestellten hohen Anforderungen Rechnung zu tragen, ist eine ganze Reihe von qualitätssichernden Maßnahmen erforderlich, zu denen auch eine Prüfung der Oberflächenbeschaffenheit der erwähnten Teile gehört. Diese Prüfung wird zur Zeit visuell durchgeführt, indem z.B. die Teile beim Herstellen auf zwei parallel angeordneten Sichtstrecken von zwei Personen ständig beobachtet werden, um auf diese Weise Teile mit Oberflächendefekten manuell aussortieren zu können. Dabei werden sowohl die Oberfläche als auch die Auflagefläche bezüglich Oberflächenbeschädigungen und Eindringung von Fremdteilen in den Werkzeugeingriff geprüft. Dadurch soll sichergestellt werden, daß die geprüften Teile automatisiert beim Verwender verbaut werden können.

Weniger vorteilhaft ist bei einer derartigen Prüfung anzusehen, daß deren Zuverlässigkeit ausschließlich personenabhängig ist, so daß aufgrund der hohen -vorgegeben durch die feste Stückleistung des Kontrollprozesses - psychischen Dauerbelastung des Kontrollpersonals eine "Null-Fehler-Forderung" nicht vorbehaltslos erreicht werden kann.

Es ist daher Aufgabe der vorliegenden Erfindung, ein Verfahren anzugeben, das ermöglicht, die oben erwähnten Nachteile des Standes der Technik dadurch zu vermeiden, daß eine automatisierte berührungsfreie Oberflächenkontolle der zylindrischen Teile mittels einer vollautomatisch arbeitenden , maschinellen Bildverarbeitungsstation durchgeführt wird.

Gleichzeitig soll es möglich sein, folgende Fehlerarten zu erkennen:
- Zieh- bzw. Fressriefen
- allgemein zu rauhe Oberfläche
- radial verlaufende Vertiefungen
- Katschen und Schlagstellen
- Vollflächigkeit bezüglich der Ausformung an Kanten
- Fremdkörper vorhanden / nicht vorhanden an innenliegenden Kraftangriffsflächen an einer Teilestirnseite
- Differenzierung zwischen unvermeidlichen oder zulässigen Schmierstoff-Rückständen und tatsächlichen Fehlern an der Manteloberfläche.

Eine weitere Aufgabe der Erfindung besteht darin, eine geeignete Vorrichtung zur Durchführung des Verfahrens zu entwickeln.

Die gestellten Aufgaben werden verfahrensmäßig durch die im kennzeichnenden Teil des Patentanspruches 1 angegebenen Merkmale gelöst, während die Vorrichtung sich durch eine Kombination der im Patentanspruch 5 angegebenen Merkmale a) bis d) auszeichnet.

Um den bei der Bestrahlung der zu prüfenden Teile gerichtet reflektierten Lichtanteil, der bei der optoelektronischen Abtastung eine Störgröße hervorruft, weitgehend zu eliminieren, wird vorgesehen, daß die Mantelfläche der zu prüfenden Teile unter einem schrägen Winkel, vorzugsweise von ca. 35° bestrahlt werden.

Um die innenliegenden Kraftangriffsflächen an der Stirnfläche der zu prüfenden Teile auf Freiheit von zufällig eingelagerten Fremdkörpern zu inspizieren, sieht die Erfindung vor, daß die Stirnfläche der zu prüfenden Teile mittels einer rotationssymmetrischen Beleuchtung bestrahlt wird.

Der diffus gestreute Lichtanteil wird nach einem weiteren vorteilhaften Merkmal des erfindungsgemäßen Verfahrens mittels einer elektronischen Kamera abgetastet, wobei die zu prüfenden Teile während der Abtastung um 360° gedreht werden.

Nach einer besonders vorteilhaften Weiterbildung der erfindungsgemäßen Vorrichtung sind eine erste Lichtquelle zur Bestrahlung der Mantelfläche der prüfenden Teile und eine erste Kamera zu deren Abtastung sowie eine zweite Lichtquelle zur Bestrahlung der Stirnfläche der zu prüfenden Teile und eine zweite Kamera zu deren Abtastung vorgesehen.

Nach einer weiteren Ausführungsform der erfindungsgemäßen Vorrichtung ist die erste Lichtquelle durch eine Halogen-Lampe mit nachgeschaltetem bündelndem Reflektor gebildet. Durch diese Maßnahme wird eine ausreichende, über die Lampenspannung gut zu regelnde Lichtintensität erreicht. Als weitere Vorteile können ein günstig gerichtetes Licht, längere Lebensdauer und niedrige Kosten für Ersatzlampen genannt werden.

Bei einer Weiterbildung der Vorrichtung ist die erste Lichtquelle durch eine stroboskopische Blitzröhre gebildet. Durch diese Maßnahme wird ein absolut scharfes Bild erreicht, da durch sehr kurze Blitze (typisch unter 10 exp -5 sec.) keine Bewegungsunschärfe verursacht wird.

Um eine geringere Baugröße der ersten Lichtquelle zu erreichen kann sie nach einem weiteren vorteilhaften Merkmal der Erfindung durch superhelle Leuchtdioden gebildet werden. Diese Maßnahme ermöglicht bestimmte geometrische Anordnungen (z.B. Ring) sowie eine gepulste Lichtabgabe.

Nach einer anderen vorteilhaften Weiterbildung der erfindungsgemäßen Vorrichtung ist vorgesehen, daß die zweite Lichtquelle durch eine rotationssymmetrische Anordnung von mehreren Glühlampen gebildet ist. Das ausgehende Licht erhellt einen Fremdkörper in einem Hohlraum von allen Seiten, kann jedoch auf direktem Wege nicht ins Innere des Holraums eindringen, so daß dieser der Kamera schwarz erscheint.

Die die Oberfläche der zu prüfenden Teile abtastende Kamera ist vorzugsweise als Matrix-Kamera ausgebildet.

Um die durch prinzipbedingte lange Belichtungszeiten der Matrix-Kamera verursachte Bewegungsunschärfe zu vermeiden sieht die Erfindung vor, daß zwischen der elektronischen Kamera und den zu prüfenden Teilen ein synchron rotierendes Drehprisma angeordnet ist, das eine Parallelverschiebung des reflektierten Strahlenganges erzeugt. Durch diese Maßnahme wird erreicht, daß der Strahlengang der rotierenden Oberfläche des zylindrischen Teiles in einem gewissen Bereich nachgeführt wird.

Das vorzugsweise mindestens vier Flächen aufweisende Drehprisma ist dabei durch einen Synchron- bzw. Schrittmotor antreibbar, wobei eine elektronische Schaltung vorgesehen ist, mit deren Hilfe eine feste Phasenlage zwischen den Bildaufnahmezyklen der Kamera und dem Drehwinkel des Drehprismas einstellbar ist.

Eine andere vorteilhafte Weiterbildung der erfindungsgemäßen Vorrichtung sieht vor, daß zwischen der Stirnfläche des zu prüfenden Teiles und der die Stirnfläche abtastenden Kamera ein zweites Drehprisma angeordnet ist, das der Kamera einen geradlinigen Strahlengang vermittelt. Diese Anordnung weist eine bemerkenswerte Eigenschaft auf:
Bei Drehung des Prismas um den Winkel alpha dreht sich die Szenerie hinter dem Prisma scheinbar um zweimal alpha.

Dieser Effekt wird wie folgt ausgenutzt: Die die Stirnfläche abtastende Kamera schaut durch dieses Prisma auf die rotierende Stirnfläche. Das Prisma wird in ein drehgelagertes Gehäuse eingebaut und von einem kleinen Getriebemotor angetrieben mit der halben Drehzahl des rotierenden Prüflings. Drehrichtung von zylindrischen Teilen und Prisma sind invers·zueinander. Die Kamera sieht damit ein ruhendes zylindrisches Teil, um den herum die Drehvorrichtung rotiert.

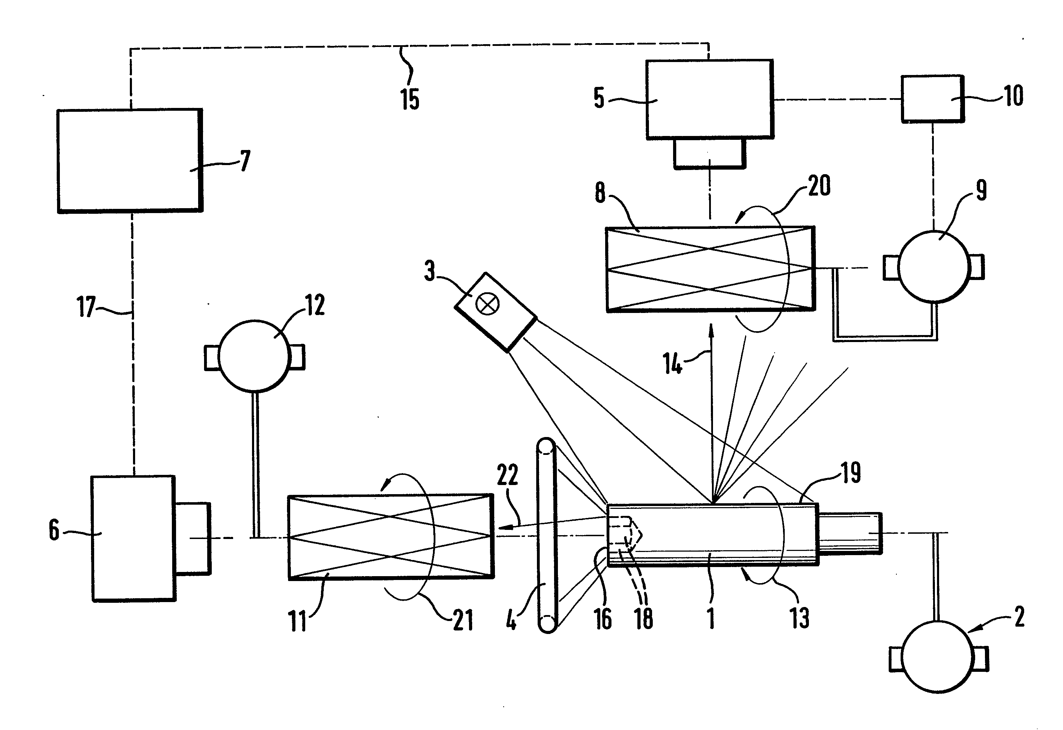

Das erfindungsgemäße Verfahren sowie die Vorrichtung zu dessen Durchführung werden nachfolgend im Zusammenhang mit der beiliegenden Zeichnung näher erläutert, dessen einzige Figur ein Beispiel der erfindungsgemäßen Vorrichtung schematisch darstellt.

Die Zeichnung zeigt eine Ausführungsform der erfindungsgemäßen Vorrichtung zur automatischen berührungsfreien Oberflächenkontrolle von zylindrischen Teilen mit einer elektromotorisch angetriebenen Drehvorrichtung 2, mit deren Hilfe die mittels eines nicht dargestellten Transportmechanismus zeitlich nacheinander zugeführten zylinderischen Teile, ggf. Bolzen 1 in eine Drehbewegung in der durch den Pfeil 13 angedeuteten Richtung versetzt werden. Zur Beleuchtung des rotierenden Bolzens 1 sind zwei Lichtquellen 3,4 vorgesehen. Die erste Lichtquelle 3, die durch eine Halogenlampe, eine stroboskopische Blitzröhre oder superhelle Leuchtdioden gebildet sein kann, ist vorzugsweise so angeordnet, daß sie eine Bestrahlung der Mantelfläche des Bolzens unter einen schrägen Winkel, beispielsweise von ca. 35° ermöglicht. Der durch einen Pfeil 14 symbolisch dargestellte diffus gestreute reflektierte Anteil des weitgehend parallelen Lichtes der ersten Lichtquelle 3 trifft unter Zwischenschaltung eines ersten Drehprismas 8 in eine erste elektronische Kamera 5, vorzugsweise eine Matrix-Kamera, ein, deren Ausgangssignale über eine gestrichelt dargestellte Signalleitung 15 einem Digitalrechner 7 zugeführt werden. Das mindestens vier Flächen aufweisende erste Drehprisma 8 wird durch einen Synchron- bzw. Schrittmotor 9 angetrieben, der mittels einer elektronischen Schaltung 10 so angesteuert wird, daß eine feste Phasenlage zwischen der Bildaufnahmefrequenz der ersten Kamera 5 und dem Drehwinkel des ersten Drehprismas 8 erzeilt wird.

Die durch die z.B. als ein Beleuchtungsring ausgebildete zweite Lichtquelle 4 bestrahlte, mehrere Kraftangriffsflächen 18 aufweisende Stirnfläche 16 des zu prüfenden Bolzens 1 wird mittels einer zweiten Matrix-Kamera 6 unter Zwischenschaltung eines zweiten Drehprismas 11 abgetastet, deren Ausgangssignale über eine zweite Signalleitung 17 dem Digitalrechner 7 zugeführt werden. Das vorzugsweise als geradsichtiges Prisma ausgebildete zweite Drehprisma 11 wird mitttels eines Getriebemotors 12 angetrieben. Die Anordnung der beiden Drehprismen 8,11 ist vorzugsweise derart getroffen, daß während die Drehachse des ersten Drehprismas 8 gegenüber der optischen Achse der ersten Matrix-Kamera 5 um 90° versetzt ist, verläuft die Drehachse des zweiten Drehprismas 11 parallel zu der optischen Achse der zweiten Matrix-Kamera 6.

Die Funktionsweise der erfindungsgemäßen Vorrichtung wird nachfolgend beschrieben:

Bei der Bestrahlung der Mantelfläche 19 des rotierenden Bolzens 1 wird das darauf fallende Licht in zwei unterschiedlichen Arten reflektiert. Der überwiegende Anteil wird gerichtet reflektiert, d.h., er verläßt die Mantelfläche 19 unter dem gleichen Winkel, unter dem er auftrat. Der eindeutig kleinere Anteil wird diffus reflektiert, d.h. nach allen Seiten gestreut. Da die gerichtet reflektierten Strahlen keinen auswertbaren Anteil an Bildinformationen enthalten, gehen sie an der ersten Matrix-Kamera 5 vorbei. Die diffus reflektierten Strahlen beinhalten die auswertbare Bildinformation und gelangen durch das erste Drehprisma 8 ins Objektiv der ersten Matrix-Kamera 5, wobei die Drehrichtung des ersten Drehprismas 8 (Pfeil 20) gegenläufig zur Drehrichtung des rotierenden Bolzens 1 ist. Das erste Drehprisma 8 bewirkt eine Parallelversetzung des Strahlenganges um das Maß, um das sich die Mantelfläche 19 des Bolzens 1 im abgetasteten Bereich ebenfalls weiterbewegt hat. Durch diese Maßnahme wird die notwendige Bildschärfe erreicht. Die oben erwähnte elektronische Schaltung 10 gewährleistet, daß der Strahlengang des diffusen Lichtanteils zum richtigen Zeitpunkt in die erste Matrix-Kamera 5 eintritt. Die von der ersten Matrix-Kamera 5 ermittelte Bildinformation wird anschließend im Digitalrechner 7 nach einzelnen Programmen ausgewertet, die speziell auf die Erkennung einer bestimmten Fehlerart ausgelegt worden sind.

Durch die Abtastung der Stirnfläche 16 des Bolzens 1 wird geprüft, ob Fremdkörper innerhalb der Kraftangriffsflächen 18 vorhanden sind. Die Anordnung der zweiten Lichtquelle 4 ist dabei vorzugsweise derart getroffen, daß der Grund der Kraftangriffsflächen 18 (z.B. Innensechskant) frei von direkt einfallendem Licht bleibt. Der durch die Stirnfläche 16 reflektierte Strahlengang 22 tritt in die zweite Matrix-Kamera 6 ein und durchdringt dabei das zweite, sich gegenläufig gegenüber dem rotierenden Bolzen 1 drehende (Pfeil 21) Drehprisma 11, durch dessen Verwendung eine wesentliche Verbesserung der Bildqualität und somit der rechnerischen Auswertbarkeit erreicht wird, da die Bewegungsschärfe des rotierenden Bolzens 1 kompensiert wird. Die Bildinformation der zweiten Matrix-Kamera 6 wird wieder im Digitalrechner 7 im Rahmen eines geeigneten Programms ausgewertet.

Bezugszeichenliste

1 Bolzen
2 Drehvorrichtung
3 Lichtquelle
4 Lichtquelle
5 Matrix-Kamera
6 Matrix-Kamera
7 Digitalrechner
8 erstes Drehprisma
9 Synchron- bzw. Schrittmotor
10 elektronische Schaltung
11 zweites Drehprisma
12 Getriebemotor
13 Pfeil
14 Pfeil
15 Signalleitung
16 Stirnfläche
17 Signalleitung
18 Kraftangriffsflächen
19 Mantelfläche
20 Pfeil
21 Pfeil
22 Strahlengang

## Ansprüche

1. Verfahren zur automatisierten berührungsfreien Oberflächenkontrolle von zylindrischen Teilen, dadurch **gekennzeichnet**, daß die zu prüfenden Teile in eine Drehbewegung um ihre Symmetrieachse versetzt und mit weitgehend parallelem Licht bestrahlt werden, dessen durch die Oberfläche der Teile reflektierter diffus gestreuter Anteil optoelektronisch ausgewertet wird.

2. Verfahren nach Anspruch 1, dadurch **gekennzeichnet**, daß die Mantelfläche der zu prüfenden Teile unter einem schrägen Winkel, vorzugsweise von ca. 35° bestrahlt wird.

3. Verfahren nach Anspruch 1, dadurch **gekennzeichnet**, daß die Stirnfläche der zu prüfenden Teile mittels einer rotationssymmetrischen Beleuchtung bestrahlt wird.

4. Verfahren nach Anspruch 2 oder 3, dadurch **gekennzeichnet**, daß der diffus gestreute Lichtanteil mittels einer elektronischen Kamera abgetastet wird, wobei die zu prüfenden Teile während der Abtastung um 360° gedreht werden.

5. Vorrichtung zur Durchführung des Verfahrens nach den vorhergehenden Ansprüchen 1 bis 4,
**gekennzeichnet** durch:

a) eine die zu prüfenden Teile (1) aufnehmende, elektromotorisch angetriebene Drehvorrichtung (2);

b) mindestens eine Lichtquelle (3,4) zur Bestrahlung der zu prüfenden Teile (1);

c) mindestens eine die Oberfläche der zeitlich nacheinander zu prüfenden Teile (1) abtastende elektronische Kamera (5,6), sowie

d) einen der elektronischen Kamera (5,6) nachgeschalteten Digitalrechner (7) zur Auswertung deren Bildinformation.

6. Vorrichtung nach Anspruch 5, dadurch **gekennzeichnet**, daß eine erste Lichtquelle (3) zur Bestrahlung der Mantelfläche (19) der zu prüfenden Teile und eine erste Kamera (5) zu deren Abtastung sowie eine zweite Lichtquelle (4) zur Bestrahlung der Stirnfläche (16) der zu prüfenden Teile und eine zweite Kamera (6) zu deren Abtastung vorgesehen sind.

7. Vorrichtung nach Anspruch 6, dadurch **ge-**

kennzeichnet, daß die erste Lichtquelle (3) durch eine Halogen-Lampe mit nachgeschaltetem bündelndem Reflektor gebildet ist.

8. Vorrichtung nach Anspruch 6, dadurch gekennzeichnet, daß die erste Lichtquelle (3) durch eine stroboskopische Blitzröhre gebildet ist.

9. Vorrichtung nach Anspruch 6, dadurch gekennzeichnet, daß die erste Lichtquelle (3) durch superhelle Leuchtdioden gebildet ist.

10. Vorrichtung nach Anspruch 6, dadurch gekennzeichnet, daß die zweite Lichtquelle (4) durch eine rotationssymmetrische Anordnung von mehreren Glühlampen gebildet ist.

11. Vorrichtung nach Anspruch 5, dadurch gekennzeichnet, daß die die Oberfläche der zu prüfenden Teile (1) abtastende Kamera (5,6) eine Matrix-Kamera ist.

12. Vorrichtung nach Anspruch 6, dadurch gekennzeichnet, daß zwischen der ersten elektronischen Kamera (5) und den zu prüfenden Teilen (1) ein mit der Bildaufnahmefrequenz der ersten Kamera (5) synchron rotierendes erstes Drehprisma (8) angeordnet ist, das eine Parallelverschiebung des reflektierten Strahlenganges erzeugt.

13. Vorrichtung nach Anspruch 12, dadurch gekennzeichnet, daß das erste Drehprisma (8) durch einen Synchron- bzw. Schrittmotor (9) antreibbar ist, wobei eine elektronische Schaltung (10) vorgesehen ist, mit deren Hilfe eine feste Phasenlage zwischen den Bildaufnahmezyklen der ersten Kamera (5) und dem Drehwinkel des ersten Drehprismas (8) einstellbar ist.

14. Vorrichtung nach Anspruch 12 oder 13, dadurch gekennzeichnet, daß das erste Drehprisma (8) mindestens vier Flächen aufweist.

15. Vorrichtung nach Anspruch 6, dadurch gekennzeichnet, daß zwischen der Stirnfläche (16) des zu prüfenden Teiles (1) und der zweiten Kamera (6) ein zweites Drehprisma (11) angeordnet ist, das der zweiten Kamera (6) einen geradlinigen Strahlengang vermittelt.

16. Vorrichtung nach Anspruch 15, dadurch gekennzeichnet, daß das zweite Drehprisma (11) durch einen Getriebemotor (12) antreibbar ist.

17. Vorrichtung nach Anspruch 16, dadurch gekennzeichnet, daß die Drehzahl des zweiten Drehprismas (11) der halben Drehzahl des zu prüfenden Teiles (1) entspricht.

18. Vorrichtung nach einem der Ansprüche 12 bis 14, dadurch gekennzeichnet, daß die Drehbewegung des ersten Drehprismas (8) gegenüber der des zu prüfenden Teiles (1) in entgegengesetzter Richtung erfolgt.

19. Vorrichtung nach einem der Ansprüche 15 bis 17, dadurch gekennzeichnet, daß die Drehbewegung des zweiten Drehprismas (11) gegenüber der des zu prüfenden Teiles (1) in entgegengesetzter Richtung erfolgt.

20. Vorrichtung nach einem der Ansprüche 12 bis 14 oder 18, dadurch gekennzeichnet, daß die Drehachse des ersten Drehprismas (8) gegenüber der optischen Achse der ersten Kamera (6) um 90° versetzt angeordnet ist.

21. Vorrichtung nach einem der Ansprüche 15 bis 17 oder 19, dadurch gekennzeichnet, daß die Drehachse des zweiten Drehprismas (11) parallel zur optischen Achse der zweiten Kamera (6) verläuft oder mit ihr identisch ist.

EP 0 358 982 A2